# EUROPEAN PATENT SPECIFICATION

(11) **EP 2 175 736 B1**
(45) Date of publication and mention of the grant of the patent: **20.02.2013**
(21) Application number: 08789177.6
(22) Date of filing: 30.06.2008
(51) Int. Cl.: A23C 1/04, A23C 19/076, A23C 21/02, A23C 21/08, A23C 21/10, A21D 2/02, A21D 2/26, A23L 1/314

(54) **SOUR WHEY POWDER ENRICHED IN CALCIUM AND ITS PRODUCTION AND UTILIZATION IN FOODSTUFFS**
MIT CALCIUM ANGEREICHERTES SAUERMOLKEPULVER, SEINE HERSTELLUNG UND VERWENDUNG FÜR NAHRUNGSMITTEL
POUDRE DE LACTOSÉRUM FERMENTÉ ENRICHIE EN CALCIUM ET SA PRODUCTION AINSI QUE SON UTILISATION DANS DES ALIMENTS

(30) Priority: 29.06.2007 HU 0700449
(43) Date of publication of application: 21.04.2010
(73) Proprietor: Pécsi Milker Kft., 7622 Pécs (HU)
(72) Inventor: KELLER, Beáta, H-7632 Pécs (HU); DR. SCHÄFFER, Béla, H-7623 Pécs (HU); DR. SZAKÁLY, Sándor, H-7621 Pécs (HU)
(74) Representative: Lengyel, Zsolt
(86) International application number: PCT/IB2008/052622
(87) International publication number: WO 2009/004566

(56) References cited:
- EP-A1- 0 619 075
- WO-A1-2007/036227
- WO-A2-00/72691
- MODLER ET AL.: "Calcium as an Adjuvant for Spray-Drying Acid Whey" JOURNAL OF DAIRY SCIENCE, vol. 61, no. 3, 1978, pages 294-299, XP002594988
- SANDERSON W B: "OPPORTUNITIES FOR WHEY & PERMEATE POWDERS" CSIRO FOOD RESEARCH QUARTERLY, MELBOURNE, AU, vol. 51, no. 1/02, 1 January 1991 (1991-01-01), pages 29-31, XP009014775 ISSN: 0310-9070
- RANHOTRA ET AL.: "Bioavailability of Calcium in a High Calcium Whey Fraction" NUTRITION RESEARCH, vol. 17, no. 11/12, 1997, pages 1663-1670, XP002594989
- ADHIKARI ET AL: "Development of stickiness of whey protein isolate and lactose droplets during convective drying" CHEMICAL ENGINEERING AND PROCESSING, ELSEVIER SEQUOIA, LAUSANNE, CH LNKD- DOI:10.1016/J.CEP.2006.07.014, vol. 46, no. 5, 23 February 2007 (2007-02-23), pages 420-428, XP005901191 ISSN: 0255-2701

## Description

### TECHNICAL FIELD OF THE INVENTION

The invention relates to sour whey powders enriched in calcium (Ca), particularly to sour whey powders enriched in calcium containing bioavailable calcium partly originating from milk and partly processed together with milk components which maintain and improve some properties of the foodstuffs, as well as to their production and utilization for enrichment of foodstuffs, and to foodstuffs enriched with them.

### BACKGROUND OF THE INVENTION

Whey is being formed all over the world in a great amount, as at the production of fresh and ripened cheeses the mass of whey is 6-10 times more than that of the main product. Considering that this liquid, called as a by-product earlier, contains materials highly valuable from the nutritional point of view (whey protein, lactose, minerals and vitamins); its further processing has been solved almost in whole Western Europe.

There are two groups of whey products: sweet whey products and sour whey products. Sweet whey is also referred to as cheese whey; it is produced during cheese-making, when rennet is applied. This group forms a large family of products with very similar composition, whereas their properties are very different. The pH value of sweet whey can range between 5.2 and 6.7

Sour whey products include quark, or fresh cheese whey and sour sweet whey. The origin of quark or fresh cheese whey is self-explanatory and sour sweet whey is made from sweet whey by souring. Lactic acid created through natural fermentation gives sour whey high acidity. The pH values of this group are typically from 3.8 to 4.6.

All types of whey can be spray-dried. Each, however, requires its own handling techniques. Layouts for spray-dried whey can vary from the very simple to the sophisticated. Generally speaking, sweet (cheese) whey is easier to dry than acid whey. The state of the art discloses several processes for powdering aqueous solutions containing solids of a typically "sticky" character. The drying directions are outlined hereinafter.

US 5 455 837 discloses a **sweetener enriched with calcium,** and its production. For powdering the aqueous solution either freeze-drying process is applied or it is dried on a stainless steel tray in a convection desiccator at 80°C.

EP 0480519 A1 discloses the production **of lactulose powder,** whereas the lactulose syrup is evaporated, the lactulose is crystallized from the concentrate, separated from the solution, and then dried. By the process crystal water free clean lactulose powder is obtained.

JP 1 328 078 patent specification discloses a spray-drying process by which **powder** of 72 mass% (weight/weight %) **lactulose content** can be produced. According to the process the possibility of spray-drying is attained by mixing lactulose syrup with lactose, galactose and casein, and then the mixture is powdered.

HU 225 544 Hungarian patent specification discloses **oligosaccharide powder** containing bioavailabe macroelements (Ca, Mg), and a method for its production. In accordance with the patented method the reaction of a food quality inorganic Ca- and/or Mg-compound and an organic dietary acid (malic, citric or lactic acid) is carried out in oligosaccharide syrup, and the obtained colloid solution is spray-dried.

US 5 580 592 discloses an **improved process for spray-drying a dairy product** selected from the group consisting of acid whey, acid whey permeate, acid cheese milk permeate, and mixtures thereof, wherein first said dairy product is concentrated by evaporation to about 45% to about 60% by weight solids; and then it is stored for a time sufficient to allow for the crystallization of most of the lactose; and a neutralizing inorganic edible salt selected from the group consisting of calcium hydroxide, calcium carbonate, calcium oxide, magnesium hydroxide, magnesium carbonate, magnesium oxide is added to said dairy product before drying.

The evaluation of the state of the art is as follows.

The *freeze-drying process* is the most expensive both from the points of view of the investment costs and energy-consumption. The cost demand of *tray-drying process* is more favorable, but the finished product is dried in form of lamellas, which are ground, but the powder-like finished product is still laminar and has heterogeneous size distribution limiting its applicability (bad dispersibility and solubility). From the point of view of costs the most favorable is *spray-drying,* and the most usable end product can be made by this process, the size distribution of which is the most homogeneous and the particles are globular, and consequently the powder is well dispersible and soluble. However, according to the Japanese specification No. JP 1 328 078 additives should be used which are sometimes not desirable (e.g. lactose), and it can not be applied in certain traditional fresh-cheese making processes because the reaction and the gases evolving during the reaction make the whey whipped to a significant degree, moreover firm foam is formed.

To give an example, the processing of whey of cheeses coagulated by rennet has often been used in Hungary, and mainly whey powder and whey protein concentrate are produced. However, in case of the whey of cow's coarse grain curd belonging to the category of fresh cheeses, problems arise. The reason of these problems is that the coarse grain curd (which is together with sour cream are ancient Hungarian dairy products originating from the Carpathian basin) is made by microbiological fermentation (souring), therefore its whey is also sour (pH = 4.2-4.6). The benefit of sour whey is the high calcium (Ca) content. However, in this sour whey, due to fermentation, the original physical structure of whey proteins can not be restored by neutralization, so it can not be powdered even at pH 7.0. This is similar to the phenomenon occurring to liquids of high solved carbohydrate (e.g. sugars) content, i.e. the material to be dried, instead of drying, sticks wet on the wall of the atomizer, and causes blockage after a certain time.

### OBJECT AND SUMMARY OF THE INVENTION

The object of the invention is to produce sour whey powder that keeps the originally existing beneficial trait of sour whey and that can be produced by simple and cheap technology, which contains additive to strengthen the originally existing beneficial trait of sour whey. The further objective is that the whey powder produced should not influence the organoleptical and rheological properties of the foodstuffs, or it should improve certain characteristics.

The invention is based on the finding that similarly to oligosaccharides causing sticking, and preventing drying, the whey of the fermented coagulum contains decomposed (sour) whey proteins causing the same problem. However, the whey can be spray-dried if it contains particles of an organic Ca-compound near in size to the colloid size range. Furthermore we found that it is not necessary to form these particles in the sour whey, it is sufficient to produce them in a separate solution or to resuspend them from a previously spray-dried product.

The present invention relates to sour whey powder containing referred to dry matter content 8-14 mass% calcium, 4-8 mass% whey protein, 20-40 mass% lactose, wherein 5-12 mass% of calcium content is of milk origin and 88-95 mass% is of added organic calcium salt origin. Preferably the sour whey powder of the invention contains 10-12 mass% calcium, 5-6 mass% whey protein and 25-35 mass% lactose (referred to dry matter content). According to a preferred embodiment of the present invention the sour whey is fresh cheese whey, however, the skilled person will readily recognize that any other types of sour whey can be used (e.g. quark whey or sour sweet whey).

The invention provides a method for the production of calcium enriched sour whey powder, wherein to the sour whey a salt of calcium formed with an organic acid is added in mass ratio of 40:60 - 60:40 referred to dry matter contents, and the suspension obtained is powdered, preferably spray-dried. An advantageous property of the added Ca salt is that it is not necessary to crystallize the sour whey before spray drying. Therefore with the addition of a Ca salt sour whey can be spray-dried just as easily as sweet whey. According to a preferred embodiment of the present invention said calcium salt is selected from the following: calcium-malate, calcium-lactate or calcium-citrate or any mixture thereof. The skilled person will readily recognize that further organic bioavailable calcium salts can also be used without departing from the spirit of the invention.

According to a preferred embodiment of the invention in the above method the calcium salt is used in the form of an aqueous suspension and/or the calcium salt is used in powdered form.

According to a still further preferred embodiment of the above method of the invention the sour whey is used in its original form and/or in evaporated form.

The invention concerns the use of sour whey powder enriched in calcium produced according to the above methods of the invention to increase the calcium content of foodstuffs.

### DETAILED DESCRIPTION OF THE INVENTION

### Definitions

The term "bioavailable calcium" means that calcium is in a form easily absorbable for an organism. It is well known that e.g. inorganic salts of calcium can hardly be absorbed or almost absolutely can not be absorbed in a living organism, whereas calcium from milk and most organic salts of calcium (e.g. Ca-malate and/or Ca-lactate and/or Ca-citrate) can easily be absorbed.

By the expression "calciwhey-powder" we mean a powder of calcium enriched sour whey.

The expression "mass%" means the percentage part of a given compound from the given mass (dry matter or total mass).

The originally existing beneficial property of the sour whey is its high Ca-content. In the case of rennet coagulation, where Ca binds to the coagulum, the whey contains less Ca. Contrary to this, during a fermentation process Ca is torn off from the casein, and due to this the whey contains more Ca. According to our measurements Ca-content of the sweet whey of the rennet coagulum is 30-40 mg/100g, while Ca-content of the sour whey of the fermented coagulum is more than three times higher, on average 110-140 mg/100g. Considering the above facts it is preferable to use an additive that is able to increase the Ca-content of sour whey further.

According to the method of the invention a calcium enriched sour whey powder containing bioavailable calcium can be produced which consists of the solids of whey and the organic calcium compound, i.e. free of other additives. The aqueous solution, due to the effect of the suspended organic calcium compound of particle size near to the colloid size range, can be easily powdered either after evaporation or without evaporation.

The term "bioavailable calcium" means that calcium is in a form that is easily absorbable for an organism. It is well known that e.g. inorganic salts of calcium can hardly or almost absolutely not be absorbed in an organism. The bioavailability of calcium in the whey powder of the invention is promoted by the fact that part of it is milk calcium and the other part is also organic calcium compound, and the powder contains absorption supporting adjuvants, i.e. lactose, lactic acid and milk proteins, namely whey proteins.

As a result of the colloid system created by the method of the invention the sour whey powder of high Ca-content significantly increases the Ca-content of foodstuffs if added in one-two percents in a way that the organoleptic properties are not influenced. The rheological characteristics of foods enriched with Ca do not change or some properties markedly improve.

The dry matter content of the calcium rich whey powder obtained is at least 92 mass%, its calcium content referred to dry matter is at least 8 mass%, at most 14 mass%, preferably 10-12 mass%; its whey protein content is at least 4 mass%, at most 8 mass%, preferably 5-6 mass%; its lactose content is at least 20 mass%, at most 40 mass%, preferably 25-35 mass%. The solids of the product contain between 40:60 and 60:40 mass% ratio the milk origin and the organic calcium salt origin dry matter, as a consequence 5-12 mass% of the calcium content of the product is of milk origin calcium and 88-95 mass% is of added organic calcium salt origin Ca.

Based on our invention we mix the whey of sour coagulum (preferably the whey of coarse grain curd) evaporated in itself or by a known process, or concentrated by ultrafiltration in 40:60 - 60:40 mass ratio calculated on the basis of dry matter contents with the organic calcium compound suspension, preferably with Ca-malate and/or Ca-lactate and/or Ca-citrate, produced by a known process. The suspension can also be produced from ready-made organic calcium compound preferably produced by spray drying, and consisting of globular particles of diameter less than 1 mm, preferably 0.01-0.1 mm by suspending it in water. The dry matter content of the aqueous suspension obtained in such a way is 20-60 mass%, favorably 40-50 mass%. The mixture of whey and calcium-suspension is spray-dried by the usual method, preferably by disc-type spray drying. If during the process untreated (not evaporated) whey is used then the mixture of the whey and calcium-suspension can also be evaporated in order to reduce energy costs.

If sour whey is not available whey powder enriched in Ca can also be made from sweet whey by using the known souring processes (fermentation or addition of an organic acid). In what follows the processing technology is the same as demonstrated in the invention. However, in this case, it can not be left out of account that the amount of the milk origin Ca will be 70-75 mass% less than the amount that is obtained if sour whey of sour coagulum is used.

The aforementioned part technologies applied, like evaporation, ultra-filtration, making the organic calcium-suspension and choosing the conditions of spray-drying are easily determinable for a person skilled in the arts. During spray-drying the homogeneity of the blend should be provided by mixing.

The obtained powder is yellowish white, easily flying, slightly hygroscopic and consequently slightly sticky. It is therefore practical to store the powder in air tight containers in a storing place with low humidity, under these circumstances the quality is guaranteed for a year.

The powder of calcium enriched sour whey (hereinafter calciwhey-powder) is expedient to use for Ca-compensation of dairy products from which calcium goes away due to the applied technology, and simultaneously the originally positive Ca:P ratio swings over for the benefit of phosphorus. Such dairy products, for example, are the coarse grain curd and its products, for which the supplementation to restore the original 1.2 Ca:P ratio of milk is worthwhile to use. The powder can be used to enrich or supplement other foodstuffs with calcium, as well. In meat products it is expedient to be used in an amount to attain e.g. 1:1 Ca:P ratio, and in bakery products the 1/6 RDA (Recommended Daily Allowance), i.e. addition of additive corresponding to 13.5 mg calcium referred to 100 g of the finished product, should be practically aimed at. At these bakery products the presence of whey protein and lactose is an extra benefit as these materials improve the quality: loosen the structure and provide a uniformly nice baked color.

### EXAMPLES

The invention is further illustrated by the following examples but should not be construed as any way limiting its scope.

### Example 1

Production of calciwhey powder containing in dry matter 50 mass% milk components and 50 mass% calcium-malate. 77.8 kg malic acid was mixed with 58.2 kg calcium carbonate in a powder-mixer. The powder mixture is solved in 100 kg water while mixing continuously at a rate that lets the reaction to occur between the two compounds and lets the carbon dioxide to leave from the blend. During the reaction 200 kg 50 mass% calcium-malate suspension and 36 kg carbon dioxide were produced. To the 100 kg calcium-malate suspension, while mixing continuously, 2000 kg sour whey of 5 mass% dry matter content was added that was obtained during production of coarse grain cow's curd, and then while continuously mixing the blend it was powdered on a disc-type spray-drying column.

The obtained 210 kg calciwhey powder of 95.2 mass% dry matter content contained 11 mass% calcium in solids from which 10 mass% originates from the calcium-malate and 1 mass% from the whey. In solids the milk protein content of the product was 7 mass%, and that of lactose was 32 mass%.

### Example 2

Calciwhey powder containing in dry matter 50 mass% milk components and 50 mass% calcium-malate was produced by the similar process as in example 1, but with the difference that 2000 kg sour whey was previously evaporated to dry matter content of 50 mass%, and the obtained 100 kg whey concentrate was mixed with 100 kg calcium-malate suspension. The obtained calciwhey powder composition corresponds to the calciwhey powder produced according to the process of example 1.

### Example 3

Calciwhey powder containing in dry matter 50 mass% milk components and 50 mass% calcium-malate was produced by the similar process as in example 1, but with the difference that the whey was previously ultra-filtrated to obtain a concentrate of 25 mass% dry matter content containing in solids 30 mass% whey protein and 51 mass% lactose, from which 400 kg was mixed with 100 kg calcium-malate suspension.

The obtained 208 kg calciwhey powder of 96 mass% dry matter content contained in solids 10.8 mass% calcium, 10 mass% of which originates from calcium-malate and 0.8 mass% from the whey. In solids the milk protein content of the product is 15 mass% and that of lactose is 25 mass%.

### Example 4

Calciwhey powder containing in dry matter 40 mass% milk components and 60 mass% calcium-malate was produced by the similar process as in example 1, but with the difference that to the 120 kg calcium-malate suspension 1600 kg sour whey of 5 mass% dry matter content was mixed.

The obtained 210 kg calciwhey powder of 95.2 mass% dry matter content contained in solids 12.7 mass% calcium, wherein 12 mass% comes from calcium-malate and 0.7 mass% atom the whey. In solids the milk protein content of the product is 5.6 mass% and that of lactose is 25.6 mass%.

### Example 5

Calciwhey powder containing in dry matter 60 mass% milk components and 40 mass% calcium-malate was produced by the similar process as in example 2, but with the difference that to the 80 kg calcium-malate suspension 120 kg previously evaporated whey of 50 mass% was mixed.

The obtained 210 kg calciwhey powder of 95.2 mass% dry matter content contained in solids 9.1 mass% calcium, wherein 8 mass% comes from calcium-malate and 1.1 mass% from the whey. In solids the milk protein content of the product is 8.4 mass% and that of lactose is 38.4 mass%.

### Example 6

Calciwhey powder containing in dry matter 60 mass% milk components and 40 mass% calcium-lactate was produced by the similar process as in example 5, but with the difference that lactic acid was solved in water to get 61.3 kg lactic acid solution containing 33.7 kg lactic acid. To this lactic acid solution 18.7 kg calcium carbonate was added at a rate that lets the reaction to occur and lets the departure of carbon dioxide possible. During this process 80 kg calcium-lactate of 50 mass% dry matter content is produced, and 12.4 kg carbon dioxide departs from the system. 120 kg evaporated whey is mixed to this suspension.

The obtained 210 kg calciwhey powder of 95.2 mass% dry matter content contained in solids 8.1 mass% calcium, wherein 7 mass% originates from calcium-lactate and 1.1 mass% from the whey. In solids the milk protein content of the product is 8.4 mass% and that of lactose is 38.4 mass%.

### Example 7

Calciwhey powder containing in dry matter 50 mass% milk components and 50 mass% calcium-citrate was produced by the similar process as in example 1, but with the difference that the 100 kg suspension was obtained by the mixing of 50 kg water and 50 kg spray-dried calcium-citrate.

The obtained 210 kg calciwhey powder of 95.2 mass% dry matter content contained in solids 13 mass% calcium, wherein 12 mass% originates from calcium-citrate and 1 mass% from the whey. The other parameters of the product correspond with that of demonstrated in Example 1.

In the following examples the enrichment of foodstuffs with calciwhey powder is shown.

### Example 8

Fresh cheese dessert was produced supplemented with calcium to 1:1 Ca:P ratio, the original calcium content of which was 57 mg/100 g, and phosphorus content was 160 mg/100 g. To the raw materials measured into the cutter (fresh cheese, butter, sugar, aroma) calciwhey powder produced by the process according to Example 1 was added in an amount of 984 g/100 kg, then the components were mixed in the way determined by the technology, and fresh cheese dessert was prepared from it. The product made in such a way contained both Ca and P in 160-160 mg/100 g concentration. The organoleptical and rheological properties of the product supplemented with Ca do not differ from those products that have not been supplemented.

### Example 9

Bologna sausage supplemented with calcium to 1:1 ratio was produced, the original calcium content of which was 24 mg/100 g, and phosphorus content was 120 mg/100 g. Calciwhey powder made by the process according to Example 3 in an amount of 926 g to 100 kg was added to the raw materials measured into the cutter (pork meat, grease, pulp of rind of bacon, water, additives, salt, seasonings), then the components were mixed in the way determined by the technology, and Bologna sausage was prepared from it. The products made in such a way contained both Ca and P in 120-120 mg/100 g concentration.

### Example 10

White bread enriched with calcium was produced. To the flour calciwhey powder made by the process according to Example 2 was mixed. The amount was calculated for 0.7 kg flour (= 1 kg bread) so that the added calcium should be 1/6 RDA, i.e. 1.35 g/0.7 kg flour, which means 13 g calciwhey powder for 0.7 kg flour. Considering that the bread originally also contained calcium in concentration of 20 mg/100 g, it will safely contain Ca in the amount of 1/6 RDA. The structure of white bread enriched with calcium and produced in this way was looser, its volume was more by 20%, and the surface had a uniformly nice baked color.

### Example 11 (Comparative example)

Fresh cheese dessert was produced supplemented with calcium to 1:1 ratio, the original calcium content of which was 57 mg/100 g, and phosphorus content was 160 mg/100 g. To the raw materials measured into the cutter (fresh cheese, butter, sugar, aroma) 492 g/100 kg calcium-malate containing 21.3 mass% calcium and 492 g/100 kg cheese whey powder containing 0.1 mass% calcium were added. So, to the raw materials an additive in the amount according to Example 8 and of composition according to Example 1 was added. In what follows the technology outlined in Example 8 was used. The product obtained contained both Ca and P in concentration of 160-160 mg/100 kg, but its consistency was significantly softer than that of the product not supplemented with Ca.

### Example 12 (Comparative example)

White bread enriched with calcium was produced. To the flour 6.5 g/0.7 kg calcium-malate containing 21.3 mass% calcium and 6.5 g/0.7 kg cheese whey powder containing 0.1 mass% calcium were mixed. So, to the flour an additive in the amount according to Example 10 and of composition according to Example 1 was added. White bread made from said flour safely contains 1/6 RDA Ca, but shows neither volume increase nor more loose structure, but due to the added whey protein its color is nice, uniformly baked.

## Claims

1. Sour whey powder containing, referred to dry matter content,
- 8-14 mass% calcium,
- 4-8 mass% whey protein,
- 20-40 mass% lactose,
wherein 5-12 mass% of calcium content is of milk origin and 88-95 mass% is of added organic calcium salt origin.

2. The sour whey powder according to claim 1 containing 10-12 mass% calcium, 5-6 mass% whey protein and 25-35 mass% lactose.

3. The sour whey powder according to claims 1 or 2, wherein the sour whey powder is fresh cheese whey powder, preferably quark whey powder.

4. Method for the production of calcium enriched sour whey powder, wherein to sour whey a salt of calcium formed with an organic acid is added in mass ratio of 40:60 - 60:40 referred to dry matter contents, and the suspension obtained is powdered.

5. The method according to claim 4, wherein the suspension is spray-dried.

6. The method according to claims 4 or 5, wherein calcium-malate, calcium-lactate or calcium-citrate or their mixture is used as the calcium salt.

7. The method according to any of claims 4-6, wherein the calcium salt is used in the form of an aqueous suspension.

8. The method according to any of claims 4-7, wherein the calcium salt is used in powdered form.

9. The method according to any of claims 4-8, wherein the sour whey is used in its original form.

10. The method according to any of claims 4-9, wherein the sour whey is used in evaporated form.

11. The method according to any of claims 4-10, wherein the sour whey is fresh cheese whey.

12. The use of whey powder enriched in calcium according to any of claims 1-3 or obtainable by a method according to any of claims 4-11 to increase the calcium content of foodstuffs.

13. Sour whey powder obtainable by the method according to claim 4.

14. Sour whey powder according to claim 13, said whey powder containing, referred to dry matter content,
- 8-14 mass% calcium,
- 4-8 mass% whey protein,
- 20-40 mass% lactose,
wherein 5-12 mass% of calcium content is of milk origin and 88-95 mass% is of added organic calcium salt origin.

## Patentansprüche

1. Sauermolkenpulver enthaltend, bezogen auf den Trockenmassegehalt,
- 8-14 Masse-% Calcium,
- 4-8 Masse-% Molkenprotein,
- 20-40 Masse-% Lactose,
wobei 5-12 Masse-% des Calciumgehalts von Milch stammen und 88-95 Masse-% von zugesetztem organischem Calciumsalz stammen.

2. Sauermolkenpulver nach Anspruch 1, enthaltend 10-12 Masse-% Calcium, 5-6 Masse-% Molkenprotein und 25-35 Masse-% Lactose.

3. Sauermolkenpulver nach Anspruch 1 oder 2, wobei das Sauermolkenpulver Frischkäsemolkenpulver, vorzugsweise Quarkmolkenpulver ist.

4. Verfahren zur Herstellung von mit Calcium angereichertem Sauermolkenpulver, wobei einer Sauermolke ein mit einer organischen Säure gebildetes Salz von Calcium im Massenverhältnis 40:60 - 60:40, bezogen auf den Trockenmassegehalt, zugesetzt wird und die erhaltene Suspension pulverisiert wird.

5. Verfahren nach Anspruch 4, wobei die Suspension sprühgetrocknet wird.

6. Verfahren nach Anspruch 4 oder 5, wobei Calciummalat, Calciumlactat oder Calciumcitrat oder deren Mischung als Calciumsalz verwendet wird.

7. Verfahren nach irgendeinem der Ansprüche 4-6, wobei das Calciumsalz in Form einer wässrigen Suspension verwendet wird.

8. Verfahren nach irgendeinem der Ansprüche 4-7, wobei das Calciumsalz in Pulverform verwendet wird.

9. Verfahren nach irgendeinem der Ansprüche 4-8, wobei die Sauermolke in ihrer ursprünglichen Form verwendet wird.

10. Verfahren nach irgendeinem der Ansprüche 4-9, wobei die Sauermolke in eingedampfter Form verwendet wird.

11. Verfahren nach irgendeinem der Ansprüche 4-10, wobei die Sauermolke Frischkäsemolke ist.

12. Verwendung von Molkenpulver, das nach irgendeinem der Ansprüche 1-3 mit Calcium angereichert ist oder durch ein Verfahren nach irgendeinem der Ansprüche 4-11 erhaltbar ist, um den Calciumgehalt von Lebensmitteln zu erhöhen.

13. Sauermolkenpulver, erhaltbar durch das Verfahren nach Anspruch 4.

14. Sauermolkenpulver nach Anspruch 13, wobei das Molkenpulver bezogen auf den Trockenmassegehalt Folgendes enthält:
- 8-14 Masse-% Calcium,
- 4-8 Masse-% Molkenprotein,
- 20-40 Masse-% Lactose,
wobei 5-12 Masse-% des Calciumgehalts von Milch stammen und 88-95 Masse-% von zugesetztem organischem Calciumsalz stammen.

## Revendications

1. Poudre de lactosérum acide contenant, en référence à la teneur en matière sèche,
calcium de 8 à 14 % en masse,
protéine de lactosérum de 4 à 8 % en masse,
lactose de 20 à 40 % en masse,
dans laquelle 5 à 12 % en masse de la teneur en calcium provient du lait et 88 à 95 % en masse provient de sel de calcium organique ajouté.

2. Poudre de lactosérum acide selon la revendication 1 contenant calcium de 10 à 12 % en masse, protéine de lactosérum de 5 à 6 % en masse et lactose de 25 à 35 % en masse.

3. Poudre de lactosérum acide selon la revendication 1 ou 2, dans laquelle la poudre de lactosérum acide est de la poudre de lactosérum de fromage frais, préférentiellement de la poudre de lactosérum de fromage blanc.

4. Procédé pour la production de poudre de lactosérum acide enrichie en calcium, dans lequel un sel de calcium formé avec un acide organique est ajouté au lactosérum acide dans un rapport massique de 40:60 - 60:40 en référence à la teneur en matière sèche, et la suspension obtenue est pulvérisée.

5. Procédé selon la revendication 4, dans lequel la suspension est desséchée par pulvérisation.

6. Procédé selon la revendication 4 ou 5, dans lequel du malate de calcium, du lactate de calcium ou du citrate de calcium ou leur mélange est utilisé comme sel de calcium.

7. Procédé selon l'une quelconque des revendications 4 à 6, dans lequel le sel de calcium est utilisé sous la forme d'une suspension aqueuse.

8. Procédé selon l'une quelconque des revendications 4 à 7, dans lequel le sel de calcium est utilisé sous sa forme pulvérulente.

9. Procédé selon l'une quelconque des revendications 4 à 8, dans lequel le lactosérum acide est utilisé sous sa forme d'origine.

10. Procédé selon l'une quelconque des revendications 4 à 9, dans lequel le lactosérum acide est utilisé sous sa forme évaporée.

11. Procédé selon l'une quelconque des revendications 4 à 10, dans lequel le lactosérum acide est de la poudre de lactosérum de fromage frais.

12. Utilisation de poudre de lactosérum enrichie en calcium selon l'une quelconque des revendications 1 à 3 ou pouvant être obtenue par le procédé selon l'une quelconque des revendications 4 à 11 pour augmenter la teneur en calcium d'aliments.

13. Poudre de lactosérum acide pouvant être obtenue par le procédé selon la revendication 4.

14. Poudre de lactosérum acide selon la revendication 13, ladite poudre de lactosérum acide contenant, en référence à la teneur en matière sèche,
calcium de 8 à 14 % en masse,
protéine de lactosérum de 4 à 8 % en masse,
lactose de 20 à 40 % en masse,
dans laquelle 5 à 12 % en masse de la teneur en calcium provient du lait et 88 à 95 % en masse provient de sel de calcium organique ajouté.
